(19) **Europäisches Patentamt**
**European Patent Office**
**Office européen des brevets**

(11) **EP 4 268 300 B1**

(12) **FASCICULE DE BREVET EUROPEEN**

(45) Date de publication et mention de la délivrance du brevet:
**05.11.2025 Bulletin 2025/45**

(21) Numéro de dépôt: **21844736.5**

(22) Date de dépôt: **24.12.2021**

(51) Classification Internationale des Brevets (IPC):
**H01M 4/58** (2010.01)   **H01M 10/054** (2010.01)

(52) Classification Coopérative des Brevets (CPC):
**H01M 4/581; H01M 4/5815; H01M 10/054;**
**H01M 2300/0065; Y02E 60/10**

(86) Numéro de dépôt international:
**PCT/EP2021/087650**

(87) Numéro de publication internationale:
**WO 2022/136707 (30.06.2022 Gazette 2022/26)**

(54) **CELLULES ÉLECTROCHIMIQUES BASÉES SUR L'INTERCALATION ET LA DÉSINTERCALATION D'ANIONS DE CHALCOGÈNE**

ELEKTROCHEMISCHE ZELLEN AUF BASIS VON EINLAGERUNG UND ENTSCHACHTELUNG VON CHALCOGENANIONEN

ELECTROCHEMICAL CELLS BASED ON INTERCALATION AND DEINTERCALATION OF CHALCOGEN ANIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2020 FR 2014131**

(43) Date de publication de la demande:
**01.11.2023 Bulletin 2023/44**

(73) Titulaires:
• **Nantes Université**
  **44000 Nantes (FR)**
• **Centre National de la Recherche Scientifique**
  **75016 Paris (FR)**

(72) Inventeurs:
• **CARIO, Laurent**
  **44200 NANTES (FR)**
• **SASAKI, Shunsuke**
  **OXFORD Oxfordshire OX2 7TS (GB)**
• **JOBIC, Stéphane**
  **44340 BOUGUENAIS (FR)**
• **CALDES, Maria Teresa**
  **44300 NANTES (FR)**
• **JANOD, Etienne**
  **44240 LA CHAPELLE SUR ERDRE (FR)**

• **CORRAZE, Benoît**
  **44300 NANTES (FR)**
• **BRAEMS-ABBASPOUR, Isabelle**
  **44300 NANTES (FR)**
• **MVELE, Louis-Béni**
  **44300 NANTES (FR)**
• **DEUDON, Catherine**
  **44300 NANTES (FR)**

(74) Mandataire: **Lavoix**
  **2, place d'Estienne d'Orves**
  **75441 Paris Cedex 09 (FR)**

(56) Documents cités:
**US-A1- 2005 196 672**

• **SASAKI SHUNSUKE ET AL: "A Topochemical Approach to Synthesize Layered Materials Based on the Redox Reactivity of Anionic Chalcogen Dimers", ANGEWANDTE CHEMIE INTERNATIONAL EDITION, vol. 57, no. 41, 21 August 2018 (2018-08-21), DE, pages 13618 - 13623, XP055837239, ISSN: 1433-7851, DOI: 10.1002/anie.201807927**

• SASAKI SHUNSUKE ET AL: "Unexplored reactivity of (Sn)2- oligomers with transition metals in low-temperature solid-state reactions", CHEMICAL COMMUNICATIONS, vol. 55, no. 44, 2 May 2019 (2019-05-02), UK, pages 6189 - 6192, XP055837232, ISSN: 1359-7345, DOI: 10.1039/C9CC01338E

**Description**

La présente invention concerne le domaine de l'électrochimie et des batteries ioniques solides en particulier.

Compte tenu du réchauffement climatique et de la pénurie de ressources naturelles, la production et le stockage d'énergie renouvelable sont cruciales et représentent l'un des plus grands défis pour la communauté scientifique.

Les dispositifs électriques et le transport électrique sont de nos jours basés sur des batteries au lithium. Cependant, les ressources de lithium sont limitées. Par conséquent, les chercheurs envisagent déjà des variantes de batteries contenant, par exemple, du sodium.

Dans ces batteries, le cation de métal alcalin (Li+, Na+) assure la conduction au sein de l'électrolyte : le cation (par exemple, ion $Li^+$) est échangé entre deux matériaux actifs situés sur les électrodes positive et négative. Ces matériaux peuvent intercaler et désintercaler du lithium, au moins dans l'électrode positive.

Plus récemment, des batteries Li-ion utilisant du soufre élémentaire en tant que cathode ont été envisagées (Manthiram et al. chem. Rev. 2014, 114, 11751-11787). Cependant, dans de telles batteries lithium-soufre, l'espèce ionique conductrice qui se déplace entre la cathode de soufre et l'anode de lithium reste le cation de lithium ($Li^+$).

D'autres espèces ioniques ont également été étudiées en tant qu'espèces conductrices dans les cellules électrochimiques, par exemple, des batteries zinc-ion qui incluent du zinc au niveau de l'électrode négative et de l'oxyde de manganèse au niveau de l'électrode positive. Ces systèmes électrochimiques sont largement étudiés mais on s'interroge encore sur leur intérêt : après des années de recherches, le premier cycle de charge/décharge stable a été récemment obtenu pour une batterie utilisant des ions d'aluminium en tant qu'espèce intercalée. Des batteries à ions de magnésium ont été obtenues avec succès. Néanmoins, l'utilisation de variantes de cations reste un défi.

Les batteries basées sur l'intercalation ou la désintercalation d'un anion ont été sensiblement moins étudiées. La plupart des recherches se concentrent sur des ions de métal où des ions d'$O_2^-$ migrent d'une cathode à air vers une anode métallique lors de la décharge. Des anions organiques ont également été envisagés ($PF_6^-$, $BF_4^-$, TFSI). Des variantes de batteries à anions utilisent du fluorure, du chlorure et de l'halogénure métallique tel que $BiF_3$ et $BiCl_3$ en tant que cathode et des métaux réactifs tels que lithium en tant qu'anode, de sorte que les anions d'halogénure migrent de la cathode vers l'anode.

Cependant, les sources de lithium sont limitées et d'autres matériaux doivent être envisagés.

Par conséquent, un objet de l'invention consiste à proposer d'autres matériaux électroactifs qui reposent sur des éléments naturellement abondants, tels que les chalcogènes.

Sasaki et al Angewandte Chemie International vol.57, N°41, 2018 ; 13618-13623 décrit l'intercalation du cuivre dans $La_2O_2S_2$.

Les présents inventeurs ont découvert qu'il est possible de désintercaler et de réintercaler à une température modérée (< 300° C) un chalcogène/chalcogénure, tel que du soufre, provenant de matériaux contenant des oligomères de chalcogène, tels que des paires du soufre.

Ledit phénomène s'est révélé réversible. Cette découverte permet d'envisager l'utilisation de tels matériaux chalcogénés pour fournir des batteries chalcogène-chalcogène, par exemple soufre-soufre. De telles batteries impliquent des matériaux actifs comprenant des oligomères de chalcogène, tels que des paires chalcogènes, et l'échange d'un anion de chalcogène entre la cathode et l'anode.

Par conséquent, selon un premier objet, la présente invention concerne un matériau électroactif pour électrode de cellule électrochimique dans lequel ledit matériau comprend un oligomère de chalcogène, caractérisé en ce que ledit matériau peut désintercaler de manière réversible un anion dudit chacolgène par réduction et réintercaler ledit anion par oxydation, tout en conservant sa structure globale, ladite structure étant lamellaire.

Le terme « matériau électroactif » tel qu'utilisé dans les présentes se rapporte à des matériaux qui peuvent être utilisés en tant que matériau d'électrode et qui peuvent subir une réaction d'oxydo-réduction.

Les chalcogènes sont les éléments chimiques du groupe 16 du tableau périodique. Ledit groupe comprend en particulier les éléments suivants : oxygène (O), soufre (S), sélénium (Se), tellure (Te). Typiquement, le chalcogène est du soufre.

Le terme "oligomère" désigne une espèce chimique neutre ou chargée comprenant des atomes de chalcogène liés chimiquement les uns aux autres par le biais de liaisons chimiques fortes. Typiquement, ces blocs sont constitués de quelques atomes de chalcogène identiques, typiquement entre 2 et 6, avec une charge qui peut aller de 1 à 2. L'oligomère de chalcogène représente ainsi une séquence linéaire ou non linéaire de 2 à 6 atomes de chalcogène, typiquement de formule $Q_n$, où Q représente un atome de chalcogène et n représente un nombre entier compris entre 2 et 6. Typiquement, l'oligomère de chalcogène est une paire de soufre (S-S).

Typiquement, ledit matériau comprenant un oligomère de chalcogène peut être choisi en particulier parmi $La_2O_2S_2$, $SrS_2$, $SrS_3$, $BaS_2$, $BaS_3$, $Ba_2S_2F_2$, $FeS_2$, $NiS_2$, $CoS_2$, $MnS_2$, $TiS_3$, $VS_4$, $PbS_2$, $BiS_2$ mais un composé quelconque avec une séquence d'au moins 2 atomes de chalcogène peut présenter un intérêt.

Selon l'invention, lesdits matériaux comprennent des oligomères de chalcogène qui peuvent être réduits pour former des anions de chalcogène ou des anions d'oligomères de chalcogène, tels que :

$$(Q_n)^{2-} + (2n-2)e^- \rightarrow n\ Q^{2-}$$

Dans le cas où le chalcogène est du soufre, le clivage réducteur suivant peut se produire : $(S_2)^{2-} + 2e^- \rightarrow 2\ S^{2-}$ ou $(S_3)^{2-} + 4e^- \rightarrow 3\ S^{2-}$

A titre illustratif, la structure de $La_2O_2S_2$ est constituée de couches infinies de $^{2/\infty}[La_2O_2]^{2+}$ de type fluorite séparées les unes des autres par des dimères de soufre $(S_2)^{2-}$ isolés alignés parallèlement à ces blocs 2D. La désinsertion , à savoir la désintercalation d'un atome de soufre par dimère aboutit à un composé de $La_2O_2S$ dont la structure est héritée de la structure stratifiée du précurseur de $La_2O_2S_2$. Cette toute nouvelle phase se cristallise dans le groupe spatial Amm2 et est un nouveau polymorphe du La2O2S (hp-La2O2S (P-3m1)) hexagonal bien connu. Ci-après, le terme oA-La2O2S sera utilisé pour ladite forme orthorhombique spécifique par opposition à la forme hexagonale bien connue.

En conséquence, le $La_2O_2S_2$ désintercale et ré-intercale de manière réversible le $S^{2-}$ selon la réaction suivante

$$La_2O_2S_2 + 2e^- \leftrightarrows oA\text{-}La_2O_2S + S^{2-}$$

où oA désigne la forme cristalline orthorhombique centrée.
L'oA-$La_2O_2S$ n'a jamais été synthétisé ni identifié auparavant.
Selon un autre objet, la présente invention concerne ainsi également le matériau de formule :

$$oA\text{-}La_2O_2S \qquad (I)$$

où oA désigne la forme cristalline orthorhombique centrée.

De manière similaire, le $La_2O_2S_2$ désintercale et ré-intercale également de manière réversible 0,5 $S^-$ selon la réaction suivante :

$$La_2O_2S_2 + e^- \leftrightarrows oA\text{-}La_2O_2S_{1.5} + 0.5\ S^{2-}$$

oA-$La_2O_2S_{1.5}$ (groupe spatial Amm2) n'a jamais été synthétisé ni identifié auparavant. Selon un autre objet, la présente invention concerne ainsi également le matériau de formule (II) :

$$OA\text{-}La_2O_2S_{1.5} \qquad (II)$$

où oA désigne la forme cristalline orthorhombique centrée.
Selon un mode de réalisation, l'oA-La2O2S (I) peut être préparé à l'aide d'un processus comprenant les étapes de mélange de $La_2O_2S_2$ et de Rb et de chauffage dudit mélange. Typiquement, la réaction peut être réalisée dans un tube de silice scellé, de préférence selon un rapport molaire de 1 : 2. Typiquement, la température de chauffage est comprise entre 200 and 350° C, en particulier par application ou adaptation de la procédure traitée dans les exemples.
Selon un mode de réalisation, l'*oA*-$La_4O_4S_3$ (II) peut être préparé de manière similaire. Selon une variante de mode de réalisation, il peut également être préparé par intercalation d'anions de soufre dans de l'oA-$La_2O_2S$, à savoir à l'aide d'un processus comprenant les étapes de mélange d'*oA*-$La_2O_2S$ avec des paillettes de S, et de chauffage dudit mélange. Typiquement, le mélange peut être granulé et scellé dans un tube en silice sous vide avant l'étape de chauffage. Typiquement, la température de chauffage est comprise entre 150 et 200° C.
Les matériaux de formule (I) et (II) peuvent être caractérisés par leur spectre de diffraction électronique et radiologique, comme illustré sur les figures jointes.
Tel qu'utilisé dans les présentes, la désintercalation désigne la désinsertion d'un atome ou d'un ion d'un réseau hôte où il résidait, alors que la ré-intercalation désigne la réintroduction (ou la réinsertion) dans le réseau, de manière réversible et sans modification de la structure cristalline globale du matériau hôte, à savoir de sa structure lamellaire.
L'invention vise un matériau électroactif pour électrode de cellule électrochimique dans lequel ledit matériau comprend un oligomère de chalcogène, caractérisé en ce que ledit matériau peut désintercaler de manière réversible un anion dudit chalcogène par réduction et réintercaler ledit anion par oxydation, tout en conservant sa structure lamellaire.
Selon l'invention, un anion de chalcogène (ou de chalcogénure) (typiquement $S^{2-}$) se désintercale du matériau d'électrode lors de la décharge (réduction) et se ré-intercale au sein dudit matériau lors de la charge (oxydation), au niveau de l'électrode positive.
Selon un mode de réalisation, ledit anion de chalcogène est du soufre ou un oligomère de celui-ci de formule (III) :

$$(S_n)^{x-} \qquad (III)$$

où n et x sont des nombres entiers, de sorte que x est égal à 1 ou 2, et n est compris entre 1 et 6.

Typiquement, n est 1 et x est 2, de sorte que ledit anion de chalcogène est du $S^{2-}$.

Selon un mode de réalisation, l'électrode de cellule électrochimique est une électrode positive. L'électrode positive désigne l'électrode d'une cellule électrochimique appelée élément dans les présentes, où pénètrent des électrons, et où sortent des ions de chalcogène lors de la décharge.

« L'électrode positive » désigne en décharge, l'électrode fonctionnant comme une cathode et en charge, l'électrode fonctionnant comme une anode, l'anode étant définie en tant qu'électrode où se produit une réaction d'oxydation électrochimique (émission d'électrons), alors que la cathode est le siège d'une réduction.

Selon un autre objet, la présente invention concerne également une électrode positive comprenant le matériau électroactif de l'invention.

Selon un mode de réalisation, l'électrode positive peut comprendre un collecteur de courant et une couche de revêtement, dans lequel ladite couche de revêtement comprend ledit matériau électroactif.

L'électrode positive est généralement constituée d'un milieu conducteur utilisé en tant que collecteur de courant qui est revêtu d'un mélange comprenant le matériau électroactif, et, typiquement, des particules d'électrolyte à l'état solide, un additif électroconducteur et un liant.

Par le terme "collecteur de courant", on entend un élément tel que pastille, plaque, feuille d'aluminium, feuille, maille, tissu ou autre, composé d'un matériau conducteur, connecté à l'électrode positive ou négative, et assurant la conduction du flux d'électrons entre l'électrode et les bornes de la batterie.

Typiquement, le collecteur de courant est constitué d'un métal ou d'un alliage choisi dans le groupe constitué d'aluminium, de cuivre, de nickel, de carbone, d'acier inoxydable et des alliages de ceux-ci.

Selon un mode de réalisation, le collecteur de courant est une feuille d'aluminium.

Selon un autre objet, la présente invention concerne également une cellule électrochimique comprenant :

- une électrode positive telle que définie ci-dessus ;
- une électrode négative ;
- une couche électrolytique prise en sandwich entre les électrodes positive et négative,

caractérisée en ce que l'électrolyte est un électrolyte solide comprenant en tant qu'ion conducteur l'anion de chalcogène de l'oligomère de chalcogène du matériau électroactif.

Le terme « électrode négative » désigne en décharge, l'électrode fonctionnant comme une anode et en charge, l'électrode fonctionnant comme une cathode, l'anode étant définie en tant que l'électrode où se produit une réaction d'oxydation électrochimique (émission d'électrons), alors que la cathode est le siège d'une réduction.

Typiquement, le terme électrode négative se rapporte à l'électrode d'où sortent des électrons, et sur laquelle des anions de chalcogène sont collectés en décharge.

Par « cellule électrochimique » on entend une cellule électrochimique élémentaire composée de l'ensemble électrode positive / électrolyte / électrode négative, permettant à l'énergie électrique fournie par une réaction chimique d'être stockée et renvoyée sous forme de courant.

Selon un mode de réalisation, la cellule électrochimique est une cellule à l'état solide.

Dans tous les éléments de type solide, les composés électrolytiques peuvent être inclus dans la couche électrolytique à l'état solide, mais peuvent également être partiellement inclus au sein des électrodes.

Selon un autre objet, la présente invention concerne une batterie comprenant une pluralité de cellules électrochimiques telles que définies ci-dessus, dans laquelle les cellules sont connectées électriquement.

Par « batterie » ou accumulateur, on entend l'ensemble de plusieurs cellules selon l'invention.

Figures

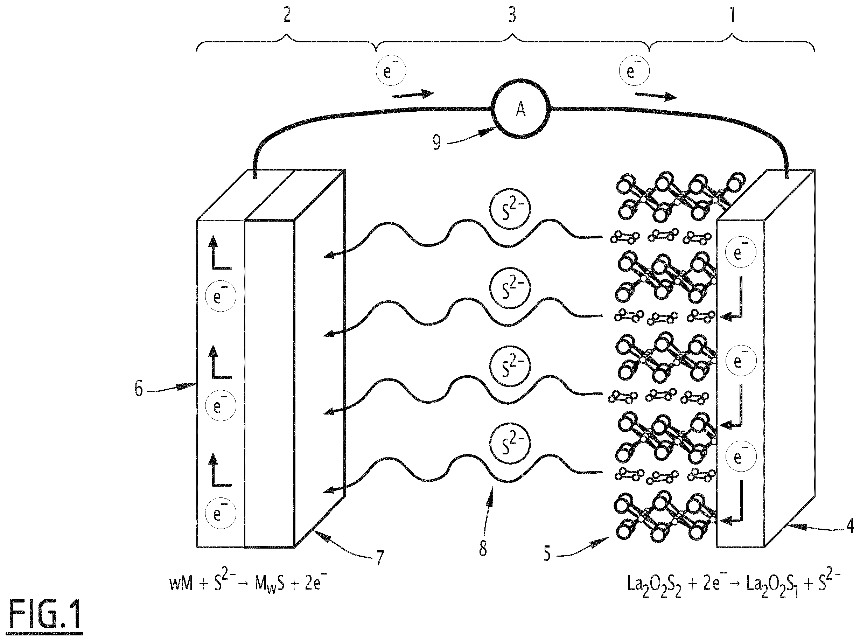

[Fig 1] La figure 1 illustre le principe d'une batterie soufre-soufre selon l'invention, impliquant du soufre en tant que chalcogène et du $La_2O_2S_2$ en tant que matériau électroactif.

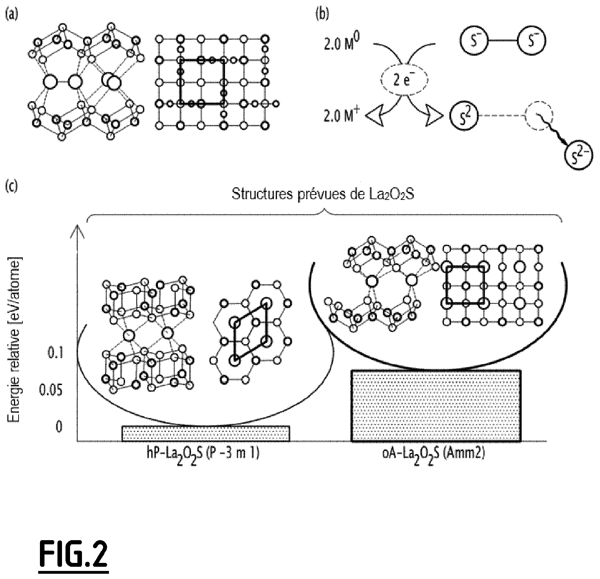

[Fig 2] La figure 2 illustre (a) la structure de $La_2O_2S_2$ rapportée par Ostorero et al. (SG: Cmca) (Acta Cryst. C46, 1376-1378 (1990)) ; (b) le schéma conceptuel de clivage de liaison S-S dans le cadre d'un don d'un électron par métal élémentaire $M^0$ qui déclenche par la suite la désintercalation du demi-atome de soufre de l'haltère $S_2$ qui permet éventuellement la conversion topochimique de $La_2O_2S_2$ en le nouveau polymorphe de $La_2O_2S$ ; (c) les deux phases dynamiquement stables de faible énergie de l'oA-La2O2S prédites par USPEX.

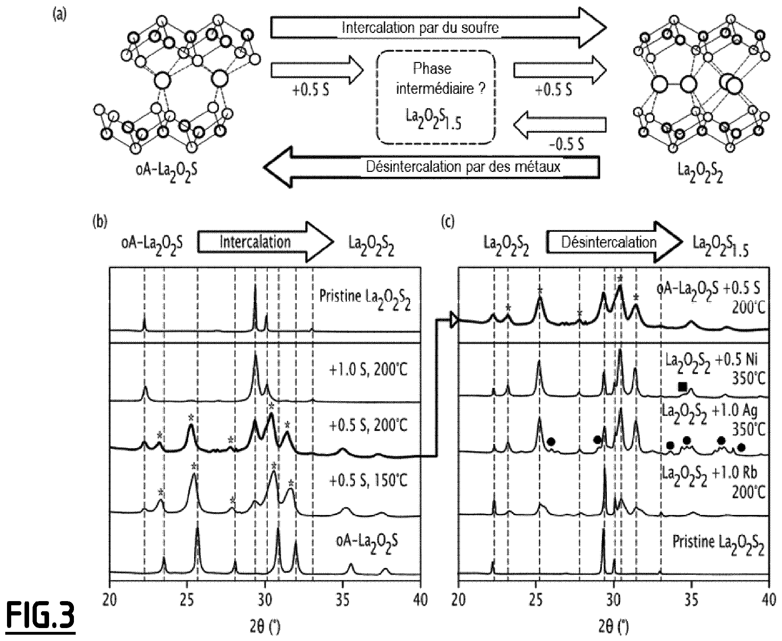

[Fig 3] La figure 3 illustre (a) l'intercalation partielle de soufre dans l'oA-La2O2S et la désintercalation de soufre du La$_2$O$_2$S$_2$ qui aboutit à un composé intermédiaire d'oA-La$_2$O$_2$S$_{1.5}$ ; (b) des expériences d'intercalation de soufre dans de l'*oA*-La$_2$O$_2$S. Diagrammes DRX expérimentaux d'*oA*-La$_2$O$_2$S pur et des produits de son mélange avec du soufre (0,5 ou 1 équiv. de S) après traitements thermiques à 150 ou 200° C. Les nouveaux pics DRX émergeant après le traitement thermique avec 0,5 S sont repérés par un * ; (c) la désintercalation de soufre du La$_2$O$_2$S$_2$. Diagrammes DRX expérimentaux de La$_2$O$_2$S$_2$ et du produit de son mélange avec du Rb$^0$, de l'Ag° et du Ni$^0$ après les traitements thermiques à 200 ou 350° C. Les pics DRX attribués aux produits dérivés sont repérés comme suit ; • = Ag$_2$S (Für Krist. - Cryst. Mater. 110, 136-144 (1958); ▪ = $\alpha$-NiS (J. Trahan, R. G. Goodrich, S. F. Watkins, Phys. Rev. B 2, 2859-2863 (1970)).

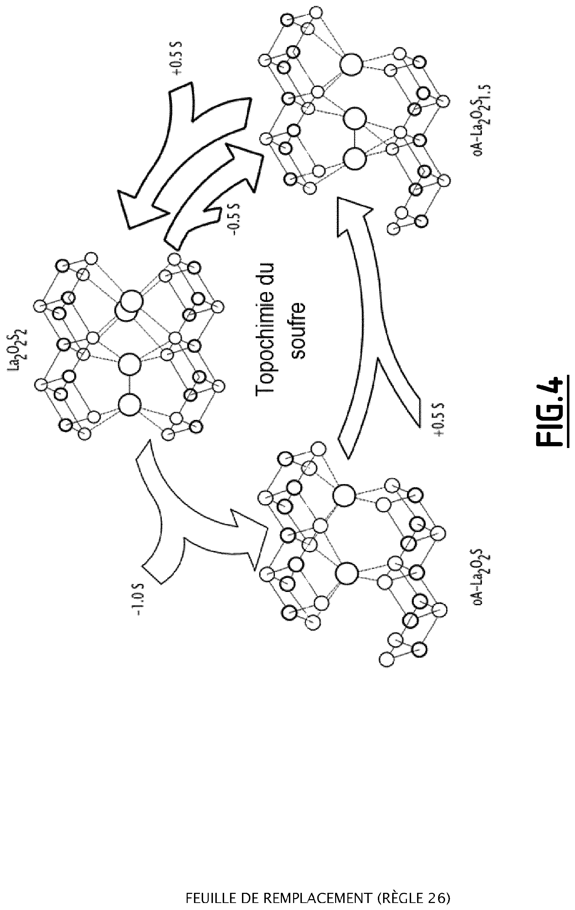

[Fig 4] La figure 4 représente la vue d'ensemble de la topochimie du soufre riche à basse température dans le système La-O-S. L'intercalation et la désintercalation topochimique de soufre dans le La$_2$O$_2$S$_2$ composé d'oxychalcogénure aboutissent à la formation de deux nouveaux composés métastables.

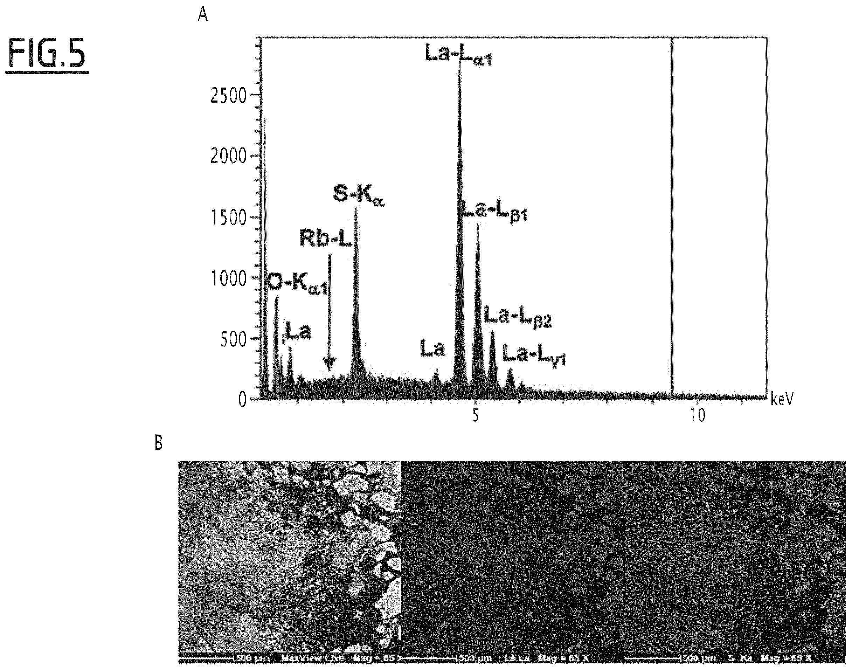

[Fig 5] La figure 5 représente (a) le spectre EDX de l'échantillon de poudre d'oA-La$_2$O$_2$S imprégné avec de la résine époxy et (b) son image électronique rétrodiffusée (BEI) ainsi que sa composition élémentaire mappée pour La et S.

Sur la figure 1, la cellule d'une telle batterie soufre-soufre est représentée schématiquement lors de la décharge.

Ladite cellule comprend une électrode positive 1 (cathode), et une électrode négative 2 (anode). Un électrolyte conducteur d'anion de soufre 3 est pris en sandwich entre les électrodes 1 et 2.

Les deux électrodes 1 et 2 sont connectées électriquement au moyen d'un circuit électrique incluant un ampèremètre 9.

Tel que décrit sur la figure 1 :

L'électrode positive 1 comprend un collecteur de courant 4 et une couche de matériau électroactif 5. La couche 5 se trouve au niveau d'une interface entre l'électrolyte conducteur 3 et la face interne du collecteur de courant 4. Typiquement, le collecteur de courant 4 peut être une feuille d'aluminium.

L'électrode négative 2 comprend un collecteur de courant 6 et une couche 7 au niveau de l'interface entre l'électrolyte conducteur 3 et la face interne du collecteur de courant 6.

En général, le collecteur de courant 6 de l'électrode négative est composé de cuivre.

La couche 7 peut être constituée d'un composite de soufre ou d'un métal M qui peut réagir avec un anion de soufre selon la réaction : wM+S$^{2-}$ →M$_w$S+2e$^-$. Il peut également être constitué d'un autre matériau apte à intercaler et désintercaler des anions de soufre.

Lors d'une décharge, l'électrode positive 1 attire les électrons du circuit électrique de telle sorte qu'un clivage réducteur se produit, tel que dans le cas de La$_2$O$_2$S$_2$ :

$$\text{La}_2\text{O}_2\text{S}_2 + 2e^- \leftrightarrows oA\text{-La}_2\text{O}_2\text{S} + \text{S}^{2-}$$

Les anions de S$^{2-}$ migrent à travers l'électrolyte 8 de l'électrode positive 1 vers l'électrode négative 2 et sont collectés au niveau de l'électrode négative 2 pour subir une oxydation, libérant des électrons : S$^{2-}$ -> S$^0$ + 2 e$^-$ ou wM+S$^{2-}$ → M$_w$S+2e$^-$

Les électrons résultants migrent ensuite à nouveau vers l'électrode positive 1 à travers le circuit électrique 9.

Bien que non représentées sur la figure 1, les réactions opposées se produisent en charge, où l'électrode positive devient l'anode (siège de l'oxydation) et l'électrode négative devient la cathode (siège de la réduction).

Les exemples suivants sont donnés uniquement à titre illustratif.

## Exemples

Du La$_2$O$_2$S$_2$ est utilisé en tant que précurseur pour tester la réduction topochimique de chalcogénures (Fig. 2a).

Sa structure est constituée de couches infinies de $^{2/\infty}[\text{La}_2\text{O}_2]^{2+}$ de type fluorite séparées les unes des autres par des dimères de soufre (S$_2$)$^{2-}$ isolés alignés parallèlement à ces blocs 2D. La désinsertion d'un atome de soufre par dimère devrait aboutir a priori à un composé de La$_2$O$_2$S (Fig. 2b) dont la structure devrait être héritée de la structure stratifiée du précurseur de La$_2$O$_2$S$_2$. Premièrement, les structures de faible énergie du composé de La$_2$O$_2$S utilisant une méthodologie de prédiction de structure cristalline (CSP) élaborée ont été étudiées. La combinaison d'un algorithme évolutif de recherche de structure USPEX avec des premiers calculs de principe permet de repérer deux polymorphes, à savoir des structures cristallines hP et oA qui sont respectivement stable et métastable (voir Fig. 2c). Les deux phases sont dynamiquement stables, ce qui justifie leur emplacement respectif à des minima global et local sur la surface d'énergie potentielle du La$_2$O$_2$S. Le candidat le plus stable présente une structure stratifiée hexagonale avec une plaque de

$^{2}/_{\infty}[La_2O_2]$ de type fluorite (111) alternant avec des atomes de soufre dans l'environnement octaédrique du lantane. Fait intéressant, il s'agit de la structure exacte du composé de $La_2O_2S$ rapportée dans la documentation (Acta Cryst. B29, 2647-2648 (1973)), communément préparé à température élevée (800-1200 °C). Dans ce qui suit, cette structure sera notée $hP$-$La_2O_2S$ selon la notation de Pearson ($h$ pour hexagonal et $P$ pour cellule primitive). USPEX a également prédit la structure d'un polymorphe métastable inconnu avec une enthalpie seulement légèrement supérieure. Cette structure présente également une caractéristique stratifiée mais repose sur l'empilage of plaques de $^{2}/_{\infty}[La_2O_2]$ de type fluor (réminiscence complète de la structure du $La_2O_2S_2$) en alternance avec des atomes de soufre dans des environnements prismatiques. De la même manière avec le $hP$-$La_2O_2S$, ce polymorphe métastable avec le groupe spatial $Amm2$ orthorhombique est nommé ci-après $oA$-$La_2O_2S$. Les stabilités thermique et cinétique de ces deux structures ont été par la suite confirmées par simulation d'une dynamique moléculaire ab initio (AIMD) dans laquelle $hP$- et $oA$-$La_2O_2S$ ont tous deux conservé leur ossature structurale principale après 10 ps à des températures pouvant atteindre 600 K. Par conséquent, les calculs théoriques prévoient clairement la possible existence d'$oA$-$La_2O_2S$ métastables en plus de la phase $hP$-$La_2O_2S$ déjà connue.

La désinsertion topochimique de soufre dans le précurseur de $La_2O_2S_2$ stratifié a ensuite été tentée par réaction avec du métal alcalin $Rb^0$ à basse température dans des tubes en Pyrex sous vide et fermés hermétiquement. Une fois que le Rb excédentaire (et ses sels) a été rincé à l'éthanol sec (voir procédure synthétique dans SI), des diagrammes de diffraction de rayons X sur poudre (DRXP) ont été recueillis sur des produits synthétisés à 200° C and 350° C. Tous deux se sont avérés être très similaires et n'ont mis en lumière de phases connues. De plus, les analyses EDX de la poudre de produit en vrac ont révélé l'absence de rubidium et un rapport molaire La / S de 2.0(2) / 1.0(1) (Voir figure 5). Ces résultats indiquent la formation d'une phase $La_2O_2S$ à faible teneur en soufre sans incorporation de Rb dans la structure. Aucun pic $hP$-$La_2O_2S$ n'a été détecté dans le diagramme des rayons X mais l'existence du polymorphe $oA$-$La_2O_2S$ prévue par USPEX pourrait être facilement établie par le biais d'un affinement de Rietveld avec une qualité d'ajustement de $\chi^2$ = 1.33 et un facteur de fiabilité de Bragg de $R$(obs) = 1,67 % : voir tableau ci-dessous :

**[Tableau 1] Tableau 1.** Paramètres Cristallographiques déterminés à partir de l'affinement de Rietveld de la poudre d'$oA$-$La_2O_2S$.

| *Données cristallographiques* | | | | |
|---|---|---|---|---|
| Formule chimique | $La_2O_2S$ | | | |
| Masse molaire (g mol$^{-1}$) | 341,87 | | | |
| Symétrie | Orthorhombique | | | |
| Couleur | Blanc | | | |
| Groupe spatial | *Amm2* (N° 38) | | | |
| *a* (Å) | 4,1489(1) | | | |
| *b* (Å) | 3,9750(9) | | | |
| *c* (Å) | 12,728(0) | | | |
| Volume (Å$^3$) | 209,9(1) | | | |
| *Z* | 2 | | | |
| Densité (g cm$^{-3}$) | **5,4088** | | | |
| Contrainte anisotrope (Å$^{-2}$)$^2$ | $S_{400}$ = 11,8(9) ; $S_{040}$ = 8,66(0) ; $S_{004}$ = 0,0485(9) ; $S_{220}$ = 2,82(0) ; $S_{202}$ = 0,830(7) ; $S_{022}$ = 0.636(8) ; | | | |
| Paramètre de March-Dollase (Orientation préférée le long de <100>) | $P_{md}$ = 0,943(5) | | | |
| *Affinement structurel* | | | | |
| Facteur de fiabilité de profil | $R_p$ = 6,38% | | | |
| Facteur de fiabilité de profil pondéré | $R_{wp}$ = 8,73% | | | |
| Facteurs de fiabilité de Bragg | $R$(obs) = $R$(all) = 1,67% | | | |
| Facteurs de fiabilité de Bragg pondérés | $R_w$(obs) = $R_w$(all) = 2,29% | | | |
| Qualité d'ajustement | $\chi^2$ = 1,33 | | | |
| *Position atomiques paramètres thermiques isotropes[a]* | | | | |
| Atome | *x* | *y* | *z* | $U_{iso}$ (Å$^2$) |

(suite)

| Position atomiques paramètres thermiques isotropes[a] | | | | |
|---|---|---|---|---|
| La1 | 0 | 0 | 0,6442(4) | 0,0054(8) |
| La2 | 0,5 | 0,5 | 0,8379(7) | 0,0040(1) |
| O1 | 0 | 0,5 | 0,7350(1) | 0,001[b] |
| O2 | 0,5 | 0 | 0,7169(3) | 0,001[b] |
| S1 | 0 | 0 | 0,9664(7) | 0,0068(4) |

[a] Les facteurs d'occupation de site de tous les atomes sont fixés à une occupation complète.
[b] Ces facteurs de déplacement atomique sont fixés à 0,001.

La microscopie électronique à transmission et à balayage (STEM) étaye également la conclusion que la phase nouvellement synthétisée est de l'$oA$-La$_2$O$_2$S. L'empilage de feuilles infinies $^{2}/_{\infty}$[La$_2$O$_2$] avec la structure de plaque de type fluor (100) est clairement visible sur l'image de STEM en champ sombre annulaire de grand angle (HAADF) STEM. Au contraire, on ne peut pas trouver la caractéristique des plaques de type fluorite (111) du polymorphe stable $hP$-La$_2$O$_2$S sur l'image de STEM expérimentale. Le spectre EDX d'un monocristal de taille nanométrique était, de même que pour l'analyse EDX de la poudre en vrac, conforme à la composition de La$_2$O$_2$S. L'agencement structurel du nouveau composé d'$oA$-La$_2$O$_2$S est directement hérité de celui du La$_2$O$_2$S$_2$. Cette observation étaye incontestablement la nature topochimique du processus de désintercalation. Le processus de désintercalation du soufre ne modifie en aucun cas l'intégrité de la plaque de $^{2}/_{\infty}$[La$_2$O$_2$] mais suppose un changement d'une couche de $^{2}/_{\infty}$[La$_2$O$_2$] sur deux le long de la direction ½($b + c$) de la structure de La$_2$O$_2$S$_2$ limpide (SG: $Cmca$). Une spectroscopie Raman a confirmé la perte complète des dimères de soufre lors de la réduction topochimique : la bande associée aux modes d'étirement S-S se trouvant à 487 et 498 cm$^{-1}$ dans le La$_2$O$_2$S$_2$ a totalement disparu après la désintercalation d'un atome de soufre du La$_2$O$_2$S$_2$ confirmant la conclusion faite à partir du diagramme DRX que la réaction de $hP$-La$_2$O$_2$S avec $oA$-La$_2$O$_2$S était terminée. Enfin, les spectres de réflectance diffuse étayent également le clivage de dimères de (S$_2$)$^{2-}$. Les seuils d'absorption se déplacent de 2.50 eV dans La$_2$O$_2$S$_2$, une caractéristique de valeur d'une transition électronique $\pi^*$-$\sigma^*$ de paires isolées, à 3.88 eV dans oA-La$_2$O$_2$S, une valeur légèrement inférieure à celle observée dans hP-La$_2$O$_2$S (4,13 eV). Ainsi, on a conclu que lors de la réaction du La$_2$O$_2$S$_2$ avec le rubidium élémentaire, le métal alcalin active une réaction d'oxydoréduction avec des dimères de (S$_2$)$^{2-}$ qui déclenchent la rupture des liaisons S-S. Cependant, contrairement aux nanoparticules de Cu$^0$ qui s'intercalent dans le réseau hôte de La$_2$O$_2$S$_2$ (Angew. Chem. Int. Ed. 57, 13618-13623 (2018)), le Rb$^0$ conduit à la désinsertion topochimique de soufre pour obtenir la phase métastable de oA-La$_2$O$_2$S. Le choix d'agents réducteurs est le facteur décisif sur la conséquence de la réaction. Aucune réaction ne s'est produite lorsque du La$_2$O$_2$S$_2$ a été traité à 200 - 300° C sous atmosphère réductrice, à savoir, un flux de 5 % de H$_2$/A. A 350° C la réduction a enfin eu lieu, mais elle s'est terminée avec le hP-La$_2$O$_2$S thermodynamiquement stable, où la plaque en fluorite d'origine (100) a été déformée en la plaque de fluorite (111). Ce résultat met en évidence le contraste entre l'agent réducteur commun tel que le H$_2$ et l'agent réducteur le plus puissant Rb$^0$, lequel a même favorisé à la même température réactionnelle (350° C) la réduction topochimique à oA-La$_2$O$_2$S.

A ce stade, on a émis l'hypothèse que la désintercalation topotactique de La$_2$O$_2$S$_2$ peut être réversible ou non à basse température. Pour tester cette possibilité, une partie d'oA-La$_2$O$_2$S a été mélangée avec un équivalent de soufre et chauffée à 200° C (figure 3a). Le produit a été analysé au moyen d'une DRX comme représenté sur la figure 3b. Le matériau La$_2$O$_2$S$_2$ d'origine pourrait être récupéré complètement sans aucun sous-produit confirmant le caractère réversible des processus d'intercalation/désintercalation assistés par température sur la base de la formation/rupture de dimères de soufre à l'intérieur des oxychalcogénures stratifiés de La$_2$O$_2$S/La$_2$O$_2$S$_2$. Pour avoir un meilleur aperçu concernant l'intercalation de soufre, la réactivité d'oA-La$_2$O$_2$S vis-à-vis de seulement la moitié de l'équivalent de soufre à basse température a également été testée. Le diagramme DRX du produit obtenu à partir de l'intercalation de 0.5 S dans oA-La$_2$O$_2$S à 200° C (voir figure 3b) met clairement en évidence la conversion d'oA-La$_2$O$_2$S en une phase intermédiaire inconnue en conjugaison avec une faible quantité de La$_2$O$_2$S$_2$. Le diagramme de DRX de la phase intermédiaire était similaire à celui de l'oA-La2O2S mais décalé à des angles de diffraction inférieurs, suggérant l'existence d'une phase d'oA-La$_2$O$_2$Sx intercalée (1 < x < 2,0). Le même diagramme DRX a été observé lors de la tentative de désintercaler 0,5 S de La$_2$O$_2$S$_2$ au moyen de 1,0 équiv. de Rb$^0$, 1,0 équiv. d'Ag et 0,5 équiv. de Ni$^0$ (figure 3c). Le diagramme de diffraction d'oA-La$_2$O$_2$S$_{1,5}$ pourrait être affiné avec le même groupe spatial qu'oA-La$_2$O$_2$S (Amm2) et des paramètres de cellules de ~ 8,4 Å, ~ 4,0 Å et ~ 12,8 Å sans aucun pic de superstructure. Ceci a clairement prouvé l'existence d'une phase intermédiaire avec une forte réminiscence de la structure oA-La$_2$O$_2$S. Une des hypothèses raisonnables est que cette nouvelle phase intermédiaire a remplacé une moitié de S$^{2-}$ monoatomique par des anions (S$_2$)$^{2-}$ dimères conservant l'infrastructure structurelle principale d'$oA$-La$_2$O$_2$S. Cette dimérisation partielle devrait aboutir à la composition d'oA-La$_2$O$_2$S$_1$,5

escomptée. En effet, l'intercalation de 0,5 S et la désintercalation de 0,5 S au moyen d'espèces métalliques ont toutes deux donné les spectres Raman similaires qui présentaient le simple pic intense à 413-417 cm$^{-1}$ alors que des pics Raman provenant d'oA-La$_2$O$_2$S ou de La$_2$O$_2$S$_2$ étaient absents. Puisqu'un pic intense de l'ordre de 400-500 cm$^{-1}$ est caractéristique du mode d'étirement S-S (Angew. Chem. Int. Ed. Engl. 14, 655-720 (1975)), ces spectres Raman soutiennent la formation de oA-La$_2$O$_2$S$_{1,5}$ par le biais du clivage partiel de liaisons S-S.

Pour dissoudre la structure cristalline de cette nouvelle phase, des analyses de diffraction par précession des électrons en mode tomographie (PEDT) ont été réalisées. Cette technique émergeante peut réduire les effets de diffraction dynamique lors de la collecte de données et permet de solutionner des structures complexes ab initio au moyen de nanocristaux simples. Des données de PEDT ont par conséquent été recueillies sur plusieurs nanocristaux de la nouvelle phase. Tous les ensembles de données ont été analysés au moyen des programmes informatiques PETS2.0 (Acta Crystallographica, B75, 512-522 (2019).), Superflip (Journal of Applied Crystallography, 40, 451-456. (2007)) et Jana2006 (Zeitschrift für Kristallographie, 229, 345-352. (2014)). On a observé la reconstruction des plans de réseau réciproques hk0, h0l et 0kl qui sont conformes à une cellule unitaire orthorhombique a = 8,348 Å, b = 3,.961 Å et c = 12,645 Å (V = 418,1 Å3) et un groupe spatial Amm2 non centrosymétrique. La structure a ensuite été résolue et affinée à l'aide du programme Jana2006 sur la base de données de diffraction électronique. L'analyse structurelle a convergé avec le facteur de fiabilité électronique de Bragg R(obs) = 10,1 %, révélant une structure stratifiée avec une composition d'oA-La$_2$O$_2$S$_{1,5}$.

Cette nouvelle structure obtenue est constituée d'une plaque infinie de $^{2/\infty}[La_2O_2]$ de type fluor (001) en alternance avec des couches de soufre contenant un tiers et deux tiers d'anions de soufre en tant qu'espèces S$^{2-}$ et (S$_2$)$^{2-}$, respectivement. A l'aide de ce modèle de structure oA-La$_2$O$_2$S$_{1,5}$, les deux diagrammes de DRX sur poudre issus de l'intercalation et de la désintercalation du soufre, à savoir de mélanges réactionnels d'oA-La$_2$O$_2$S + 0,5 S et de La$_2$O$_2$S$_2$ + 0,5 Ni (voir figure 3), ont tous deux été affinés avec succès. Des paramètres de forte contrainte ont dû être envisagés pour atteindre un ajustement satisfaisant. Ceci peut être interprété comme la signature d'un problème d'empilement survenant, comme escompté, lors des processus d'intercalation ou de désintercalation en relation avec la structure 2D du réseau hôte et une possible existence de différents stades. L'analyse structurelle a été basée sur des données recueillies sur les cristaux les mieux cristallisés. Cependant, dans la plupart des données PEDT, les défauts d'empilement aboutissent à des caractéristiques de diffusion diffuse le long de [001]. Le contraste expérimental dans l'image STEM-HAADF indique l'empilement de plaques de type fluor $^{2/\infty}[La_2O_2]$ (001) infinies. Une structure similaire a été prévue indépendamment par l'algorithme évolutif USPEX pour cette composition d'oA-La$_2$O$_2$S$_{1,5}$ spécifique. La structure prévue comme étant la plus stable s'accordait bien avec la structure expérimentale obtenue par l'analyse PEDT. Les 2$^{ième}$ and 3$^{ième}$ structures les plus stables affichaient des plaques hexagonales 1D et 2D (de type fluor (111)) en tant que leurs unités [La$_2$O$_2$] et ces plaques constituaient des structures d'intercroissance avec des (quasi-)réseaux 2D de dimères/d'atomes de soufre. Cependant, aucune d'entre elles n'a pu être trouvée dans les expériences réalisées.

Le présent travail démontre la désintercalation et la ré-intercalation de soufre dans un composé d'oxychalcogénure stratifié à l'aide d'une approche topochimique originale. Des métaux alcalins ou de transition peuvent être utilisés en tant qu'agent réducteur pour déclencher la réduction des oligomères de chalcogénure et la rupture de la liaison chalcogène-chalcogène. Dans le cas de La$_2$O$_2$S$_2$, la désintercalation à basse température d'atomes de soufre se déroule en deux étapes pour former deux nouvelles phases métastables oA-La$_2$O$_2$S$_{1,5}$ et OA-La$_2$O$_2$S qui conservent la caractéristique stratifiée du précurseur. Comme le montre la figure 4, il s'agit d'un processus topotactique complètement réversible puisque les atomes de soufre peuvent être ré-intercalés à basse température pour reformer le précurseur La$_2$O$_2$S$_2$.

**[Tableau2] Tableau 2.** Résumé de paramètres cristallographiques de séries de La$_2$O$_2$S$_x$ ($1 \leq x \leq 2,0$)

|  | La$_2$O$_2$S$_2$ | hP-La$_2$O$_2$S$_2$ | oA-La$_2$O$_2$S | oA-La$_2$O$_2$S$_{1,5}$ |
|---|---|---|---|---|
| **Source** | Ostorero et al. (XRD) | Morosin et al. (XRD) | Présente étude (DRX) | Présente étude (PEDT) |
| **Groupe Spatial** | Cmca | P-3m1 | Amm2 | Amm2 |
| **a (Å)** | 13,215(2) | 4,049(1) | 4,148(9) | 8,348 |
| **b (Å)** | 5,943(1) | - | 3,975(1) | 3,961 |
| **c (Å)** | 5,938(1) | 6,939(2) | 12,728(0) | 12,645 |
| **distance S-S (Å)** | 2,103 | 4,049 | 3,975 | 2,011 |

Ostero et al Acta Cryst. C46, 1376-1378 (1990) Morosin et al Angew. Chem. Int. Ed. Engl. 14, 655-720 (1975)

**1. Procédures de synthèse**

Le précurseur initial La$_2$O$_2$S$_2$ a été synthétisé en suivant la procédure décrite dans Angew. Chem. Int. Ed. 2018, 57, 13618-13623

*oA-La$_2$O$_2$S : désintercalation topochimique d'anions de S$^{2-}$ par Rb*

Avant la préparation, tous les articles en verre et ustensiles de l'expérience ont été séchés dans le four (*T* = 80 °C). Sous atmosphère d'argon, du La$_2$O$_2$S$_2$ et Rb (Aldrich, 98+ %) ont été pesés dans un rapport molaire de 1 : 2 et introduits dans le tube de silice dont le fond a été protégé par un revêtement en carbone. Toutes ces préparations ont été réalisées sous atmosphère d'argon. Le tube en pyrex a été mis sous vide (~10$^{-3}$ torr) et scellé. Le mélange scellé a été chauffé à 200 °C à une vitesse de 20 °C h$^{-1}$ et recuit pendant 2 h. Pour finir, le mélange scellé a été refroidi progressivement dans un four pour donner la poudre gris-bleu pâle. Le surplus de Rb s'est déposé sur le côté opposé du tube de silice. Le tube de silice a été ouvert sous atmosphère d'argon et tout le contenu a été refroidi rapidement avec la quantité en excès d'éthanol (*Attention : sous atmosphère ambiante, le Rb s'allume lors du contact avec de l'éthanol*). Le précipité incolore a été contaminé par les petits flocons de carbone, qui ont été séparés par décantation répétitive avec agitation mécanique. Le précipité a ensuite été lavé avec de l'éthanol, de l'eau et de l'acétone, puis amené à siccité sous vide pour obtenir la poudre incolore d'*oA*-La$_2$O$_2$S. Le produit a été stable sous atmosphère ambiante. La même réaction obtenue à 350 °C a également donné les résultats identiques, de l'*oA*-La$_2$O$_2$S pur sans aucune trace de *hP*-La$_2$O$_2$S ni d'autres impuretés.

*Intercalation d'anions de soufre dans l'oA-La$_2$O$_2$S*

La poudre incolore d'*oA*-La$_2$O$_2$S (*ca.* 200 mg) a été combinée avec des flocons de S (Aldrich, 99,99+ %) dans l'*oA*-La$_2$O$_2$S : rapport molaire S = 1 : 0,5 et broyée sur un mortier d'agate sous atmosphère d'argon. Le mélange a ensuite été granulé et scellé dans un tube de silice (~10$^{-3}$ torr) mis sous vide. Le mélange scellé a été chauffé à 150-200 °C à une vitesse de 100 °C h$^{-1}$ et recuit pendant 4-48 h (voir figure 3b pour le résultat), suivi par un refroidissement progressif dans un four pour obtenir le granulé jaune pâle. Lorsque le soufre n'a pas été complètement consommé, le soufre résiduel a été déposé sur le côté opposé du tube de silice. Pour compléter l'intercalation, le granulé obtenu a été broyé avec 0,5 d'équiv. de S supplémentaires sous atmosphère d'argon. Le mélange a ensuite été soumis au traitement thermique à 200 °C dans le tube de silice mis sous vide. Au bout de 160 h de recuit, le mélange a été pleinement converti en le granulé jaune pâle du La$_2$O$_2$S$_2$ pur.

*oA-La$_4$O$_4$S$_3$ : procédure générale pour désintercalation topochimique d'anions de S$^{2-}$ par divers métaux*

Les conditions synthétiques détaillées (à savoir, stœchiométrie, durée de recuit, formes de sources métalliques) pour des espèces métalliques respectives ont été notées ci-après. A 1,0 équiv. de La$_2$O$_2$S$_2$ (ca. 150 - 250 mg), 0.5 - 2.0 équivalents d'éléments métalliques ont été ajoutés et broyés ensemble sous atmosphère d'argon jusqu'à ce que la poudre devienne grisâtre et collante sur un mortier d'agate. Le mélange a ensuite été granulé et scellé dans un tube de silice mis sous vide (~10$^{-3}$ torr). Le mélange scellé a été chauffé à 350 °C à une vitesse de 300 °C h$^{-1}$ et recuit pendant 2-4 h. Pour finir le mélange scellé a été refroidi progressivement dans un four pour donner le mélange contenant de l'*oA*-La$_4$O$_4$S$_3$ (voir figure 3c pour son DRX).

Réaction avec Ag :

1,0 équiv. de poudre d'Ag (Aldrich, 2 - 3,5 μm, ≥ 99,9 %) a été ajouté. Recuit : 4h Ni un petit excédent (- 1,1 équiv.) d'Ag ni des traitements thermiques prolongés/répétés n'ont conduit à une plus grande consommation de La$_2$O$_2$S$_2$.

Réaction avec Ni :

0,5 équivalent de nanopoudre de Ni (Aldrich, < 100 nm, 99 %) a été ajouté. Recuit : 4 h Des traitements thermiques prolongés et répétés n'ont pas amélioré le rendement de oA-La$_4$O$_4$S$_3$, mais se sont terminés avec la décomposition partielle en *hP*-La$_2$O$_2$S

**Revendications**

**1.** Matériau électroactif pour électrode de cellule électrochimique dans lequel ledit matériau comprend un oligomère de chalcogène, **caractérisé en ce que** ledit matériau peut désintercaler de manière réversible un anion dudit chalcogène par réduction et réintercaler ledit anion par oxydation, tout en conservant sa structure lamellaire.

**2.** Matériau électroactif selon la revendication 1, dans lequel ledit anion de chalcogène est du soufre ou un oligomère de celui-ci de formule :

$$(S_n)^{x-} \qquad (III)$$

où n et x sont des nombres entiers, de telle sorte que x est égal à 1 ou 2, et n est compris entre 1 et 6.

**3.** Matériau électroactif selon la revendication 1 ou 2 dans lequel ledit anion de chalcogène est du $S^{2-}$.

**4.** Matériau électroactif selon l'une quelconque des revendications précédentes qui est choisi parmi $La_2O_2S_2$, $SrS_2$, $SrS_3$, $BaS_2$, $BaS_3$, $Ba_2S_2F_2$, $FeS_2$, $NiS_2$, $CoS_2$, $MnS_2$, $TiS_3$, $VS_4$, $PbS_2$, $BiS_2$.

**5.** Matériau électroactif selon l'une quelconque des revendications précédentes dans lequel ledit matériau actif est du $La_2O_2S_2$, qui désintercale et réintercale de manière réversible du $S^{2-}$ selon la réaction suivante :

$$La_2O_2S_2 + 2e^- \leftrightarrows oA\text{-}La_2O_2S + S^{2-}$$

où oA désigne la forme cristalline orthorhombique centrée.

**6.** Matériau de formule :

$$oA\text{-}La_2O_2S \qquad (I)$$

où oA désigne la forme cristalline orthorombique centrée.

**7.** Matériau de formule (II) :

$$oA\text{-}La_2O_2S_{1.5} \qquad (II)$$

où oA désigne la forme cristalline orthorhombique centrée.

**8.** Electrode positive comprenant le matériau selon l'une quelconque des revendications précédentes.

**9.** Electrode positive selon la revendication 8 comprenant un collecteur de courant et une couche de revêtement, dans laquelle ladite couche de revêtement comprend ledit matériau électroactif.

**10.** Electrode positive selon la revendication 9, dans laquelle le collecteur de courant est une feuille d'aluminium.

**11.** Cellule électrochimique comprenant :

- une électrode positive selon l'une quelconque des revendications 8 à 10 ;
- une électrode négative ; et
- une couche d'électrolyte prise en sandwich entre les électrodes positive et négative,

**caractérisée en ce que** l'électrolyte est un électrolyte solide comprenant en tant qu'ion conducteur l'anion de chalcogène de l'oligomère de chalcogène du matériau électroactif.

**12.** Batterie comprenant une pluralité de cellules électrochimiques selon la revendication 11, dans laquelle les cellules sont connectées électriquement.

**Patentansprüche**

**1.** Elektroaktives Material für eine Elektrode einer elektrochemischen Zelle, wobei das genannte Material ein Oligomer von Chalkogen umfasst, **dadurch gekennzeichnet, dass** das genannte Material ein Anion des genannten Chalkogens durch Reduktion reversibel deinterkalieren und das genannte Anion durch Oxidation reinterkalieren kann, wobei seine lamellare Struktur beibehalten wird.

2. Elektroaktives Material nach Anspruch 1, wobei das genannte Chalkogenanion Schwefel oder ein Oligomer davon von folgender Formel ist:

$$(S_n)^{x-} \qquad (III)$$

wobei n und x ganze Zahlen sind, sodass x gleich 1 oder 2 ist und n zwischen 1 und 6 liegt.

3. Elektroaktives Material nach Anspruch 1 oder 2, wobei das genannte Chalkogenanion $S^{2-}$ ist.

4. Elektroaktives Material nach einem der vorherigen Ansprüche, das ausgewählt ist aus $La_2O_2S_2$, $SrS_2$, $SrS_3$, $BaS_2$, $BaS_3$, $Ba_2S_2F_2$, $FeS_2$, $NiS_2$, $CoS_2$, $MnS_2$, $TiS_3$, $VS_4$, $PbS_2$, $BiS_2$.

5. Elektroaktives Material nach einem der vorherigen Ansprüche, wobei das genannte aktive Material $La_2O_2S_2$ ist, das reversibel $S^{2-}$ gemäß der folgenden Reaktion deinterkaliert und reinterkaliert:

$$La_2O_2S_2 + 2e^- \leftrightarrows oA\text{-}La_2O_2S + S^{2-}$$

wobei oA die orthorhombisch-zentrierte Kristallform bezeichnet.

6. Material von folgender Formel:

$$oA\text{-}La_2O_2S \qquad (I)$$

wobei oA die zentrierte orthorombische Kristallform bezeichnet.

7. Material von folgender Formel (II):

$$(II) \qquad oA\text{-}La_2O_2S_{1.5}$$

wobei oA die orthorhombisch-zentrierte Kristallform bezeichnet.

8. Positive Elektrode, umfassend das Material nach einem der vorherigen Ansprüche.

9. Positive Elektrode nach Anspruch 8, umfassend einen Stromkollektor und eine Überzugsschicht, wobei die genannte Überzugsschicht das genannte elektroaktive Material umfasst.

10. Positive Elektrode nach Anspruch 9, wobei der Stromkollektor eine Aluminiumfolie ist.

11. Elektrochemische Zelle, umfassend:

- eine positive Elektrode nach einem der Ansprüche 8 bis 10 ;
- eine negative Elektrode; und
- eine Elektrolytschicht, die sandwichartig zwischen der positiven und der negativen Elektrode angeordnet ist,

**dadurch gekennzeichnet, dass** der Elektrolyt ein Feststoffelektrolyt ist, umfassend als leitendes Ion Chalkogenanion des Chalkogenoligomers des elektroaktiven Materials umfasst.

12. Batterie, umfassend eine Vielzahl von elektrochemischen Zellen nach Anspruch 11, wobei die Zellen elektrisch verbunden sind.

**Claims**

1. An electroactive material for electrochemical cell electrode wherein said material comprises a chalcogen oligomer, **characterized in that** said material can reversibly deintercalate an anion of said chacolgen by reduction and reintercalate said anion by oxidation, while maintaining its lamellar structure.

2. The electroactive material of claim 1 wherein said chalcogen anion is sulfur or an oligomer thereof of formula:

$$(S_n)^{x-} \qquad (III)$$

where n and x are integers, such that x equals to 1 or 2, and n is comprised between 1 and 6.

3. The electroactive material according to claim 1 or 2 wherein said chalcogen anion is $S^{2-}$.

4. The electroactive material according to any one of the preceding claims which is chosen from $La_2O_2S_2$, $SrS_2$, $SrS_3$, $BaS_2$, $BaS_3$, $Ba_2S_2F_2$, $FeS_2$, $NiS_2$, $CoS_2$, $MnS_2$, $TiS_3$, $VS_4$, $PbS_2$, $BiS_2$.

5. The electroactive material according to any one of the preceding claims wherein said active material is $La_2O_2S_2$, which reversibly deintercalates and reintercalates $S^{2-}$ according to the following reaction:

$$La_2O_2S_2 + 2e^- \leftrightarrows oA\text{-}La_2O_2S + S^{2-}$$

where oA designates the centered orthorombic crystalline form.

6. A material of formula:

$$oA\text{-}La_2O_2S \qquad (1)$$

where oA designates the centered orthorombic crystalline form.

7. A material of formula (II):

$$oA\text{-}La_2O_2S_{1.5} \qquad (II)$$

where oA designates the centered orthorhombic crystalline form.

8. A positive electrode comprising the material according to any one of the preceding claims.

9. The positive electrode according to claim 8 comprising a current collector and a coating layer, wherein said coating layer comprises said electroactive material.

10. The positive electrode according to claim 9, wherein the current collector is an aluminium sheet.

11. An electrochemical cell comprising :

   - A positive electrode as defined in any one of claims 8 to 10;
   - A negative électrode; and
   - An electrolyte layer sandwiched between the positive and the negative electrodes,

   **characterized in that** the electrolyte is a solid electrolyte comprising as conducting ion the chalcogen anion of the chalcogen oligomer of the electroactive material.

12. A battery comprising a plurality of electrochemical cells as defined in claim 11, wherein the cells are electrically connected.

$$La_2O_2S_2 + 2e^- \rightarrow La_2O_2S_1 + S^{2-}$$

$$wM + S^{2-} \rightarrow M_wS + 2e^-$$

**FIG.1**

FIG.2

FIG.3

FIG.4

EP 4 268 300 B1

## FIG.5

A

B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MANTHIRAM et al.** *chem. Rev.*, 2014, vol. 114, 11751-11787
- **SASAKI et al.** *Angewandte Chemie International*, 2018, vol. 57 (41), 13618-13623
- *Acta Cryst.*, 1990, vol. C46, 1376-1378
- *Für Krist. - Cryst. Mater.*, 1958, vol. 110, 136-144
- **J. TRAHAN** ; **R. G. GOODRICH** ; **S. F. WATKINS**. *Phys. Rev. B*, 1970, vol. 2, 2859-2863
- *Acta Cryst.*, 1973, vol. B29, 2647-2648
- *Angew. Chem. Int. Ed.*, 2018, vol. 57, 13618-13623
- *Angew. Chem. Int. Ed. Engl.*, 1975, vol. 14, 655-720
- *Acta Crystallographica*, 2019, vol. B75, 512-522
- *Journal of Applied Crystallography*, 2007, vol. 40, 451-456
- *Zeitschrift für Kristallographie*, 2014, vol. 229, 345-352
- **OSTERO et al.** *Acta Cryst.*, 1990, vol. C46, 1376-1378
- **MOROSIN et al.** *Angew. Chem. Int. Ed. Engl.*, 1975, vol. 14, 655-720